# EUROPÄISCHE PATENTSCHRIFT

(11) **EP 4 045 784 B1**
(45) Veröffentlichungstag und Bekanntmachung des Hinweises auf die Patenterteilung: **13.09.2023**
(21) Anmeldenummer: 20792381.4
(22) Anmeldetag: 14.10.2020
(51) Int. Cl.: F02D 41/00, F02D 19/02, F02D 19/06, F02D 19/08, F02D 41/10, F02D 41/40, F02M 21/02

(54) **VERFAHREN ZUM BETREIBEN EINER BRENNKRAFTMASCHINE**
METHOD FOR OPERATING AN INTERNAL COMBUSTION ENGINE
PROCÉDÉ DE FONCTIONNEMENT D'UN MOTEUR À COMBUSTION INTERNE

(30) Priorität: 17.10.2019 DE 102019007221
(43) Veröffentlichungstag der Anmeldung: 24.08.2022
(73) Patentinhaber: MAN Truck & Bus SE, 80995 München (DE)
(72) Erfinder: MALISCHEWSKI, Thomas, 80995 München (DE); HYNA, Dominic, 80995 München (DE)
(74) Vertreter: v. Bezold & Partner Patentanwälte - PartG mbB
(86) Internationale Anmeldenummer: PCT/EP2020/078815
(87) Internationale Veröffentlichungsnummer: WO 2021/074173

(56) Entgegenhaltungen:
- WO-A1-2004/101972
- WO-A1-2006/011494
- DE-A1- 3 731 986
- DE-C2- 3 731 986
- US-A1- 2019 218 993

## Beschreibung

Die Erfindung betrifft ein Verfahren zum Betreiben einer, vorzugsweise wasserstoffbetriebenen, Brennkraftmaschine. Die Erfindung betrifft auch eine Brennkraftmaschine und ein Kraftfahrzeug mit einer Brennkraftmaschine.

Um bei einer fremdgezündeten Magerbrennkraftmaschine (z. B. Erdgas- und/oder Wasserstoff-Gasbrennkraftmaschine) das Drehmoment zu steigern, kann die Kraftstoffmenge erhöht werden. Dies hat zur Folge, dass das Luft-Kraftstoff-Gemisch im Zylinder bei der Zündung zunächst fetter wird, bis der Turbolader aufgrund der höheren Abgasenthalpie mehr Ladedruck erzeugt. Der höhere Ladedruck ermöglicht wiederum eine höhere Kraftstoffmenge zum Erhöhen des Drehmoments der Brennkraftmaschine.

Das Anfetten beim Lastaufbau hat jedoch zur Folge, dass die Stickoxidemissionen deutlich ansteigen können, selbst wenn die Brennkraftmaschine weiterhin mit einem mageren Verbrennungsluftverhältnis betrieben wird. Somit ergibt sich ein Zielkonflikt zwischen einem schnellen Lastaufbau und den Stickoxidemissionen.

Die DE 103 59 445 A1 offenbart einen Verbrennungsmotor zur Verbrennung eines Wasserstoff-Luft-Gemischs unter Arbeitsleistung. Die Einbringung des Wasserstoffs kann in einer Serie von mehreren Einspritzvorgängen um einen oberen Totpunkt zu Beginn eines Expansionstaktes herum erfolgen.

Die DE 103 21 794 A1 offenbart ein Verfahren zum Betreiben einer wasserstoffbetriebenen Brennkraftmaschine mit einer Einrichtung zum Einblasen des Kraftstoffes in den Brennraum und einer Einrichtung zum Zünden des Kraftstoff-Luft-Gemisches. Eine erste Kraftstoffmenge wird in den Brennraum eingeblasen, wobei sich ein Kraftstoff-Luft-Gemisch bildet. Das Kraftstoff-Luft-Gemisch wird gezündet, und wenigstens eine zweite Kraftstoffmenge wird in das brennende Kraftstoff-Luft-Gemisch eingeblasen.

Die WO 2004/101972 A1 offenbart ein Verfahren zum Betreiben einer gasbetriebenen Brennkraftmaschine mit einer Einrichtung zum Einblasen des Kraftstoffes in den Brennraum und einer Einrichtung zum Zünden des Kraftstoff-Luft-Gemisches, bei welchem wenigstens eine erste Kraftstoffmenge in den Brennraum eingeblasen wird, wobei sich ein Kraftstoff-Luft-Gemisch bildet, das Kraftstoff-Luft-Gemisch gezündet wird und wenigstens eine zweite Kraftstoffmenge in das brennende Kraftstoff-Luft-Gemisch eingeblasen wird.

Die WO 2006/011494 A1 offenbart ein Steuersystem für einen Verbrennungsmotor, der mit einem Hauptkraftstoff-Einspritzventil zum Einspritzen eines Hauptkraftstoffs in eine Lufteinlassöffnung und mit einem Wasserstoff-Einspritzventil zum Einspritzen von Wasserstoff ausgestattet ist und den Hauptkraftstoff und den Wasserstoff als Kraftstoffe zuführen kann, wobei das System umfasst: eine Kraftstoffzufuhreinrichtung für den Beschleunigungsmodus, um zumindest den Wasserstoff während der Beschleunigung zuzuführen.

Die DE 37 31 986 A1 offenbart ein Verfahren zum Betrieb eines Verbrennungsmotors mit Wasserstoff als Kraftstoff, bei dem man ein außerhalb des Brennraumes hergestelltes Kraftstoff-Luft-Gemisch in den Brennraum einführt und dort zündet. Um sowohl die SchadstoffEmission herabzusetzen als auch die Leistung zu steigern, wird vorgeschlagen, dass man nur einen Teil der pro Arbeitstakt benötigten Kraftstoffmenge mit der gesamten pro Arbeitstakt benötigten Verbrennungsluft vermischt in den Brennraum einführt, dass man dieses Kraftstoff-Verbrennungsluft-Gemisch im Brennraum zündet und dass man nach der Zündung dieses Kraftstoff-Verbrennungsluft-Gemisches den übrigen Teil der pro Arbeitstakt benötigten Kraftstoffmenge durch Hochdruckeinblasung unmittelbar in die Brennzone im Brennraum einführt.

Die US 2019/218993 A1 offenbart ein Verfahren zur Steuerung eines Motors in Reaktion auf eine Erhöhung der Motorlast. Der Motor umfasst einen Zylinder mit einem Kolben, der darin zwischen einer oberen Totpunktposition und einer unteren Totpunktposition verschiebbar angeordnet ist. Der Zylinder und der Kolben begrenzen einen Brennraum. Das Verfahren umfasst das Einleiten eines ersten Einspritzvorgangs und eines zweiten Einspritzvorgangs. Das erste Einspritzereignis beinhaltet das Einbringen einer ersten vorbestimmten Menge an Kraftstoff in den Brennraum mindestens 5 Grad, bevor der Kolben den oberen Totpunkt erreicht. Das zweite Einspritzereignis umfasst das Einbringen einer zweiten vorbestimmten Kraftstoffmenge in den Verbrennungsraum nicht früher als 30 Grad, nachdem sich der Kolben vom oberen Totpunkt entfernt hat.

Der Erfindung liegt die Aufgabe zu Grunde, ein alternatives und/oder verbessertes Verfahren zum Betreiben einer Brennkraftmaschine zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Gemäß einem Aspekt ist ein Verfahren zum Betreiben einer, vorzugsweise wasserstoffbetriebenen, Brennkraftmaschine (z. B. Gaskraftstoff-Brennkraftmaschine) offenbart, z. B. zum Erhöhen eines Drehmoments, eines Ladedrucks und/oder einer Abgasenthalpie der Brennkraftmaschine. Das Verfahren weist ein mageres Verbrennen einer ersten Kraftstoffmenge, vorzugsweise aus Wasserstoff und/oder Erdgas, während eines Expansionstaktes der Brennkraftmaschine in einer Hauptbrennkammer der Brennkraftmaschine auf. Das Verfahren weist ein Abkühlen der Hauptbrennkammer während des Expansionstaktes nach dem mageren Verbrennen auf. Das Verfahren weist ein Zuführen einer zweiten Kraftstoffmenge aus Wasserstoff in die Hauptbrennkammer während des Expansionstaktes nach dem Abkühlen auf. Das Verfahren weist ein Verbrennen der zweiten Kraftstoffmenge in der Hauptbrennkammer während des Expansionstaktes auf.

Das Verfahren kann den Zielkonflikt zwischen einem raschen Drehmomentaufbau und geringen Stickoxidemissionen lösen. Während des Lastaufbaus kann das Verbrennungsluftverhältnis in der Hauptbrennkammer nur soweit mittels Erhöhen der ersten Kraftstoffmenge angefettet werden, dass die Stickoxidemissionen einen bestimmten Zielwert nicht überschreiten. Um jedoch entsprechend Abgasenthalpie auf die Abgasturbine zu bringen, wird vorgeschlagen, eine z. B. kleine Menge Wasserstoff pro Zylinder/Hauptbrennkammer und Arbeitsspiel z. B. am Ende des Expansionstaktes der Hauptbrennkammer zuzuführen. Aufgrund der chemischen Eigenschaften des Wasserstoffs verbrennt der Wasserstoff auch bei sehr niedrigen Zylinderinnendrücken. Das Verfahren realisiert somit ein Wasserstoff-Boostverfahren zum Überwinden eines Turbolochs bei einer gewünschten Drehmomenterhöhung.

Vorzugsweise kann das Verfahren innerhalb eines Arbeitsspiels der Brennkraftmaschine ausgeführt werden und/oder für aufeinanderfolgende Arbeitsspiele der Brennkraftmaschine wiederholt werden, z. B. bis die gewünschte Drehmomenterhöhung, die gewünschte Abgasenthalpieerhöhung und/oder die gewünschte Ladedruckerhöhung erreicht ist.

Bevorzugt kann die Brennkraftmaschine mit einer homogene Gemischbildung aus der ersten Kraftstoffmenge betrieben werden.

In einem Ausführungsbeispiel wird das Zuführen der zweiten Kraftstoffmenge und das Verbrennen der zweiten Kraftstoffmenge durchgeführt, wenn eine Drehmomenterhöhung der Brennkraftmaschine gewünscht ist, eine Ladedruckerhöhung, der durch einen Turbolader der Brennkraftmaschine erzeugt wird, gewünscht ist, und/oder eine Abgasenthalpieerhöhung gewünscht ist.

In einem weiteren Ausführungsbeispiel ist das Zuführen der zweiten Kraftstoffmenge derart angepasst, dass eine erste mittlere Temperatur (z. B. mittlere Zylinderinnentemperatur), die in der Hauptbrennkammer bei dem mageren Verbrennen der ersten Kraftstoffmenge entsteht, größer oder gleich einer zweiten mittleren Temperatur (z. B. mittlere Zylinderinnentemperatur), die in der Hauptbrennkammer bei dem Verbrennen der zweiten Kraftstoffmenge entsteht, ist. Somit können übermäßige Stickoxidemissionen beim Verbrennen der zweiten Kraftstoffmenge verhindert werden und dennoch die Abgasenthalpie deutlich erhöht werden, da die zweite Kraftstoffmenge zweckmäßig erst kurz vor dem Ausschiebetakt verbrannt wird.

In einem weiteren Ausführungsbeispiel erfolgt das magere Verbrennen der ersten Kraftstoffmenge nur während einer zeitlich ersten Hälfte des Expansionstaktes.

In einer Ausführungsform erfolgt das Zuführen der zweiten Kraftstoffmenge und/oder das Verbrennen der zweiten Kraftstoffmenge nur während einer zeitlich zweiten Hälfte des Expansionstaktes.

In einer weiteren Ausführungsform erfolgt das Zuführen der zweiten Kraftstoffmenge (und optional das Verbrennen der zweiten Kraftstoffmenge) vor einem Öffnen eines Auslassventils der Hauptbrennkammer, vorzugsweise in einem Bereich zwischen 40°KW und 0°KW vor dem Öffnen des Auslassventils.

In einer weiteren Ausführungsform erfolgt das Zuführen der zweiten Kraftstoffmenge (und optional das Verbrennen der zweiten Kraftstoffmenge) in einem Bereich zwischen 100°KW und 140°KW nach einem Beginn des Expansionstaktes.

In einer Ausführungsvariante endet das magere Verbrennen der ersten Kraftstoffmenge innerhalb einer zeitlich ersten Hälfte des Expansionstaktes, innerhalb eines zeitlich ersten Drittels des Expansionstaktes, innerhalb eines zeitlich ersten Viertels des Expansionstaktes, innerhalb eines zeitlich ersten Fünftels des Expansionstaktes und/oder innerhalb eines zeitlich ersten Sechstels des Expansionstaktes.

In einer weiteren Ausführungsvariante erfolgt das Abkühlen über einen Kurbelwinkelbereich ≥ 50°KW, ≥ 60°KW oder ≥ 70°KW. Es ist auch möglich, dass die Hautbrennkammer bei dem Abkühlen um mehrere hundert Kelvin abkühlt, z. B. in einem Bereich zwischen 200 K und 800 K.

In einem Ausführungsbeispiel ist die erste Kraftstoffmenge größer als die zweite Kraftstoffmenge. Es ist möglich, dass die zweite Kraftstoffmenge in einem Bereich zwischen 5 % und 25 % derjenigen ersten Kraftstoffmenge, die unter Volllast der Brennkraftmaschine zugeführt wird, ist.

In einem weiteren Ausführungsbeispiel ist das Zuführen (z. B. eine Menge, ein Zuführzeitpunkt und/oder eine Zuführzeitdauer) der zweiten Kraftstoffmenge an eine gewünschten Drehmomenterhöhung der Brennkraftmaschine angepasst oder anpassbar. Das Verfahren kann somit dynamisch an die gewünschte Drehmomenterhöhung angepasst werden.

In einer Weiterbildung ist eine erste gewünschte Drehmomenterhöhung der Brennkraftmaschine kleiner als eine zweite gewünschte Drehmomenterhöhung der Brennkraftmaschine. Vorzugsweise kann ein Zuführstartzeitpunkt des Zuführens der zweiten Kraftstoffmenge bei der ersten gewünschten Drehmomenterhöhung später als bei der zweiten gewünschten Drehmomenterhöhung sein. Beispielsweise kann eine Zuführzeitdauer des Zuführens der zweiten Kraftstoffmenge bei der ersten gewünschten Drehmomenterhöhung kürzer als bei der zweiten gewünschten Drehmomenterhöhung sein. Bevorzugt kann die zweite Kraftstoffmenge bei der ersten gewünschten Drehmomenterhöhung kleiner als bei der zweiten gewünschten Drehmomenterhöhung sein.

In einer Ausführungsform erfolgt das magere Verbrennen der ersten Kraftstoffmenge mit einem Verbrennungsluftverhältnis zwischen 1.8 und 7.

In einer weiteren Ausführungsform ist das Verbrennen der zweiten Kraftstoffmenge ein mageres Verbrennen, z. B. oberhalb von einem Verbrennungsluftverhältnis von 1.3.

In einer weiteren Ausführungsform weist das Verfahren ferner ein Zuführen, vorzugsweise direktes Einblasen, der ersten Kraftstoffmenge in die Hauptbrennkammer in einem Verdichtungstakt der Brennkraftmaschine und/oder zu Beginn des Expansionstaktes der Brennkraftmaschine auf. Vorzugsweise kann die erste Kraftstoffmenge bei einer gewünschten Drehmomenterhöhung der Brennkraftmaschine nur bis zu einem vorgegebenen mageren Verbrennungsluftverhältnis erhöht werden, vorzugsweise oberhalb von 1.3, besonders bevorzugt oberhalb von 1.8.

In einer Ausführungsvariante weist das Verfahren ferner ein Selbstzünden der zweiten Kraftstoffmenge in der Hauptbrennkammer während des Expansionstaktes auf, vorzugsweise nach und/oder bei dem Zuführen der zweiten Kraftstoffmenge. Trotz der Abkühlung kann die Hauptbrennkammer noch immer heiß genug sein, dass der eingeblasene Wasserstoff selbst zündet.

In einer weiteren Ausführungsvariante weist das Verfahren ein Fremdzünden der ersten Kraftstoffmenge in der Hauptbrennkammer, z. B. zum Ende eines Verdichtungstaktes der Brennkraftmaschine oder zu Beginn des Expansionstaktes der Brennkraftmaschine auf, vorzugweise mittels einer Zündeinrichtung der Brennkraftmaschine (z. B. einer Zündkerze).

In einem Ausführungsbeispiel weist das Verfahren ferner ein Zuführen von Abgas aus der Hauptbrennkammer zu einem Turbolader der Brennkraftmaschine, vorzugweise nach dem (z. B. teilweisen oder vollständigen) Verbrennen der zweiten Kraftstoffmenge, auf.

In einem weiteren Ausführungsbeispiel erfolgt das Zuführen der zweiten Kraftstoffmenge mittels direkten Einblasens in die Hauptbrennkammer und/oder mittels eines separaten Wasserstoff-I njektors.

Gemäß einem weiteren Aspekt ist eine Brennkraftmaschine oder ein Fahrzeug (z. B. Kraftfahrzeug, vorzugsweise Nutzfahrzeug, insbesondere Lastkraftwagen oder Omnibus) mit einer Brennkraftmaschine offenbart. Die Brennkraftmaschine weist eine Hauptbrennkammer, einen Wasserstoff-Injektor zum (z. B. direkten) Einblasen von Wasserstoff in die Hauptbrennkammer, einen Turbolader und eine Steuereinheit, die zum Ausführen eines Verfahrens wie hierin offenbart konfiguriert ist, auf.

Vorzugsweise kann sich der Begriff "Steuereinheit" auf eine Elektronik (z. B. mit Mikroprozessor(en) und Datenspeicher) und/oder mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Zweckmäßig kann hierin unter einem "mageren Verbrennen" ein Verbrennen mit einem Verbrennungsluftverhältnis größer als 1 verstanden werden. Ein "Anfetten" eines Gemischs verringert das Verbrennungsluftverhältnis, wobei weiterhin ein mageres Gemisch mit einem Verbrennungsluftverhältnis größer als 1 erhalten werden kann.

Es ist auch möglich, das Verfahren wie hierin offenbart und die Brennkraftmaschine wie hierin offenbart für Personenkraftwagen, Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht einer Brennkraftmaschine;
- Figur 2: ein Kurbelwinkel-Zylinderinnentemperatur-Diagramm mit zwei beispielhaften Temperaturverläufen; und
- Figur 3: ein Zeit-Drehmoment-Diagramm mit zwei beispielhaften Drehmomentverläufen.

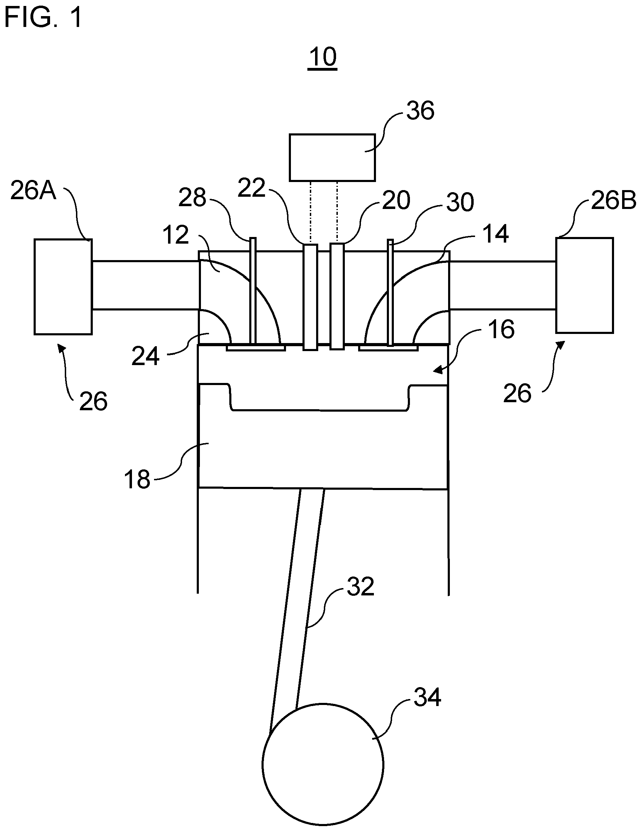

Die Figur 1 zeigt eine Brennkraftmaschine 10. Die Brennkraftmaschine 10 ist als eine Hubkolben-Brennkraftmaschine ausgeführt. Zweckmäßig ist die Brennkraftmaschine 10 als eine Viertakt-Brennkraftmaschine ausgeführt. Vorzugsweise ist die Brennkraftmaschine 10 als eine Gaskraftstoff-Brennkraftmaschine ausgeführt.

Die Brennkraftmaschine 10 weist einen oder mehrere Zylinder auf. Zur Verbesserung der Übersichtlichkeit ist lediglich ein Zylinder in Figur 1 dargestellt. Die Brennkraftmaschine 10 ist besonders bevorzugt als eine Einkraftstoff-Brennkraftmaschine zum Betreiben mittels Wasserstoff als einzigen Kraftstoff ausgeführt. Die Brennkraftmaschine 10 kann allerdings bspw. auch in Kombination mit einem anderen vorzugsweise gasförmigen Kraftstoff betrieben werden, z. B. Erdgas.

Die Brennkraftmaschine 10 kann in einem Fahrzeug, z. B. einem Kraftfahrzeug, einem Schienenfahrzeug oder einem Wasserfahrzeug, zum Antreiben des Fahrzeugs umfasst sein. Vorzugsweise ist die Brennkraftmaschine 10 in einem Nutzfahrzeug, z. B. einem Lastkraftwagen oder einem Omnibus, zum Antreiben des Nutzfahrzeugs umfasst. Es ist auch möglich, die Brennkraftmaschine 10 in einer stationären Anlage z. B. zum Antreiben eines Generators zu verwenden.

Die Brennkraftmaschine 10 kann je Zylinder mindestens einen Lufteinlasskanal 12, mindestens einen Abgasauslasskanal 14, eine Hauptbrennkammer 16, einen Kolben 18, einen Kraftstoffinjektor 20, eine Zündvorrichtung 22 und einen Zylinderkopf 24 aufweisen. Die Brennkraftmaschine 10 weist ferner einen ein- oder mehrstufigen Turbolader 26 auf.

Der Lufteinlasskanal 12 mündet in die Hauptbrennkammer 16. Über den Lufteinlasskanal 12 kann (Lade-)Luft zu der Hauptbrennkammer 16 zugeführt werden. Der Lufteinlasskanal 12 ist in dem Zylinderkopf 24 angeordnet. Der Zylinderkopf 24 begrenzt die Hauptbrennkammer 16 von oben. Stromaufwärts des Lufteinlasskanals 12 ist ein Luftzuführsystem angeordnet. Das Luftzuführsystem weist einen oder mehrere Verdichter 26A des Turboladers 26 auf. Das Luftzuführsystem kann auch einen Ladeluftkühler und/oder eine Abgasrückführleitung aufweisen. Es ist auch möglich, dass das Luftzuführsystem einen Gasmischer aufweist, in dem ein gasförmiger Kraftstoff, z. B. Erdgas, mit der Luft vermischbar ist. Gasförmiger Kraftstoff kann bspw. auch über ein Gasventil, das in den Lufteinlasskanal 12 mündet, zugeführt werden und/oder über den Kraftstoffinjektor 20.

Eine Mündungsöffnung des Lufteinlasskanals 12 in die Hauptbrennkammer 16 ist mittels eines Einlassventils 28 zu öffnen und zu schließen. Das Einlassventil 28 ist vorzugsweise als ein Tellerventil ausgeführt. Das Einlassventil 28 kann mittels jeglicher Technik betätigt werden, z. B. mittels eines zweckmäßig variablen Ventiltriebs.

Nach der Verbrennung verlässt das Abgas die Hauptbrennkammer 16 durch den mittels eines Auslassventils 30 geöffneten Abgasauslasskanal 14. Das Auslassventil 30 kann bspw. als ein Tellerventil ausgeführt sein. Der Abgasauslasskanal 14 ist in dem Zylinderkopf 24 angeordnet. Stromabwärts des Abgasauslasskanals 14 kann ein Abgassystem angeordnet sein. Das Abgassystem weist eine oder mehrere Abgasturbinen 26B des Turboladers 26 auf. Das Abgassystem kann ferner mindestens eine Abgasnachbehandlungsvorrichtung aufweisen, z. B. Filter, Katalysator usw. Das Auslassventil 30 kann mittels jeglicher Technik betätigt werden, z. B. mittels eines zweckmäßig variablen Ventiltriebs.

Der Kolben 18 ist hin- und herbewegbar in dem Zylinder angeordnet. Der Kolben 18 ist über einen Pleuel 32 mit einer Kurbelwelle 34 verbunden. Der Kolben 18 begrenzt die Hauptbrennkammer 16 nach unten. Der Kolben 18 kann Luft oder eine Luft-Kraftstoff-Gemisch in der Hauptbrennkammer 16 bei seiner Bewegung vom unteren Totpunkt zum oberen Totpunkt verdichten.

Der Kraftstoffinjektor 20 ist als ein Wasserstoff-Injektor ausgebildet. Der Kraftstoffinjektor 20 ist vorzugsweise als ein Einkraftstoff-Injektor zum Führen nur eines einzigen Gaskraftstoffs, nämlich Wasserstoff, ausgebildet. Der Kraftstoffinjektor 20 ist so angeordnet oder ausgeführt, dass Wasserstoff gasförmig direkt in die Hauptbrennkammer 16 eingeblasen wird.

Die Zuführung durch den Kraftstoffinjektor 20 erfolgt zweckmäßig mit einem hohen Druck, zum Beispiel in einem Bereich zwischen 5 bar und 100 bar. Bspw. kann der Kraftstoffinjektor 20 mit einem Wasserstoff-Common-Rail fluidisch verbunden sein. Das Wasserstoff-Common-Rail kann Wasserstoff zu dem Kraftstoffinjektor 20 zuführen.

Der Kraftstoffinjektor 20 kann dazu ausgebildet sein, eine erste Kraftstoffmenge (Hauptmenge) aus Wasserstoff und eine zweite Kraftstoffmenge (Booster-Menge) aus Wasserstoff zu unterschiedlichen Zeitpunkten während eines Arbeitsspiels der Brennkraftmaschine 10 zu der Hauptbrennkammer 16 zuzuführen.

Der Kraftstoffinjektor 20 kann auf jegliche Art und Weise betätigt sein. Um auch ein Zuführen von Kleinstmengen von Wasserstoff zu ermöglichen, kann der Kraftstoffinjektor 20 vorzugsweise ein Piezo-Kraftstoffinjektor, der mittels eines Piezoelements betätigbar ist, sein. Z. B. kann sich eine Verschlussnadel des Kraftstoffinjektors 20 in Abhängigkeit von einem Zustand eines Piezoelements bzw. Piezokristalls des Kraftstoffinjektors 20 heben oder senken. Es ist bspw. auch möglich, dass der Kraftstoffinjektor 20 mittels eines Elektromagneten betätigbar ist. Zweckmäßig ist eine Betätigung des Kraftstoffinjektors 20 durch eine elektronische Steuereinheit 36 gesteuert.

Sofern die Brennkraftmaschine 10 als eine Zweikraftstoff-Brennkraftmaschine ausgeführt ist, die vorzugsweise mit Erdgas und Wasserstoff betreibbar ist, ist es möglich, dass ein weiterer Kraftstoffinjektor für den zweiten Kraftstoff, vorzugsweise Erdgas, vorgesehen ist. Der zweite Kraftstoffinjektor kann ebenfalls in die Hauptbrennkammer 16 münden. Wie bereits erwähnt, ist es auch möglich, dass das Erdgas bereits stromaufwärts der Hauptbrennkammer 16 mit der Luft gemischt wird, z. B. in einem Gasmischer oder in dem Lufteinlasskanal 12. Bei einer Zweikraftstoff-Brennkraftmaschine kann die erste Kraftstoffmenge (Hauptmenge), die zu der Hauptbrennkammer 16 während eines Arbeitsspiels zugeführt wird, zweckmäßig aus Erdgas oder einem Erdgas-Wasserstoff-Gemisch sein. Die zweite Kraftstoffmenge (Booster-Menge), die zu der Hauptbrennkammer 16 zugeführt wird, ist aus Wasserstoff.

Die Zündvorrichtung 22 ist dazu ausgebildet, ein zündfähiges Gemisch in der Hauptbrennkammer 16 zu zünden. Bspw. kann die Zündvorrichtung 22 als eine Zündkerze ausgeführt sein. Es ist auch möglich, dass eine Vorkammer umfasst ist, in die die Zündvorrichtung 22 ragt. Die Zündvorrichtung 22 kann von der Steuereinheit 36 gesteuert sein.

Die Brennkraftmaschine 10 wird im Normalbetrieb mit einem mageren Luft-Kraftstoff-Gemisch mit homogener Gemischbildung betrieben.

In einem Einlasstakt wird (Verbrennungs-)Luft durch den Lufteinlasskanal 12 und das geöffnete Einlassventil 28 in die Hauptbrennkammer 16 zugeführt. Der Kolben 18 bewegt sich vom oberen Totpunkt zum unteren Totpunkt.

Sofern keine Erhöhung eines Drehmoments der Brennkraftmaschine 10 gewünscht ist, wird eine erste Kraftstoffmenge (Hauptmenge) aus Wasserstoff im Einlass- und/oder Verdichtungstakt mittels des Kraftstoffinjektors 20 zugeführt. Der Wasserstoff vermischt sich während des Verdichtungstaktes homogen mit der Luft in der Hauptbrennkammer 16. Die erste Kraftstoffmenge wird im Bereich des oberen Totpunkts am Ende des Verdichtungstaktes und/oder zu Beginn des Expansionstaktes mittels der Zündvorrichtung 22 fremdgezündet. Das verbrennende Wasserstoff-Luft-Gemisch expandiert und schiebt dabei den Kolben 18 zum unteren Totpunkt (Expansionstakt). Die Verbrennung verläuft aufgrund der Verwendung von Wasserstoff vergleichsweise schnell und kann bereits bei 30°KW nach dem oberen Totpunkt im Expansionstakt enden. Das entstehende Abgas wird im Ausschubtakt/Auslasstakt aus der Hauptbrennkammer 16 über das geöffnete Auslassventil 30 in den Abgasauslasskanal 14 geschoben.

Es ist möglich, dass im Einlasstakt ein Kraftstoff-Luft-Gemisch, z. B. ein Erdgas-Luft-Gemisch, über den Lufteinlasskanal 12 und das geöffnete Einlassventil 28 in die Hauptbrennkammer 16 zugeführt wird. Das Erdgas kann der Luft als erste Kraftstoffmenge bereits stromaufwärts der Hauptbrennkammer 16 zugeführt worden sein. Das Erdgas kann auch über einen separaten Kraftstoffinjektor zu der Hauptbrennkammer 16 zugeführt werden.

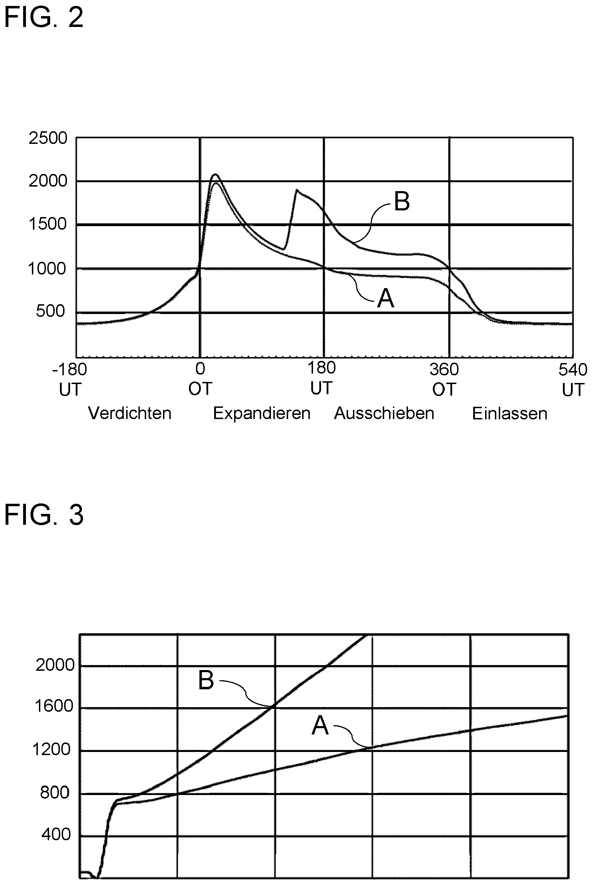

Nachfolgend ist unter Bezugnahme auf die Figuren 2 und 3 erklärt, wie sich der eingangs erläuterte Zielkonflikt zwischen einem schnellen Lastaufbau und geringen Stickoxidemissionen bei einer gewünschten Drehmomenterhöhung lösen lässt.

Die Figur 2 zeigt eine Kurbelwinkel-Zylinderinnentemperatur-Diagramm mit zwei Temperaturverläufen A und B. Ein Kurbelwinkel (°KW) der Kurbelwelle 34 der Brennkraftmaschine 10 ist auf der Abszisse (x-Achse) aufgetragen. Die Abszisse zeigt ein ganzes Arbeitsspiel der Brennkraftmaschine bestehend aus Einlasstakt, Verdichtungstakt, Expansionstakt und Ausschiebetakt. Eine mittlere Zylinderinnentemperatur (in K) ist auf der Ordinate (y-Achse) aufgetragen.

Die Figur 3 zeigt ein Drehmoment-Zeit-Diagramm mit zwei Drehmomentverläufen A und B. Die Abszisse (x-Achse) ist eine Zeitachse. Ein von der Brennkraftmaschine 10 abgegebenes Drehmoment ist auf der Ordinate (y-Achse) aufgetragen.

Unter Bezugnahme auf Figur 2 ergibt sich der Temperaturverlauf A beispielhaft, wenn bei einer gewünschten Drehmomenterhöhung lediglich die erste Kraftstoffmenge erhöht wird. Das Kraftstoff-Luft-Gemisch wird somit angefettet. Das Anfetten ist dadurch beschränkt, dass ab bestimmten Verbrennungsluftverhältnissen die Stickoxidbildung aufgrund der erhöhten Zylinderinnentemperatur erheblich zunimmt. Hieraus ergibt sich der bereits eingangs beschriebene Zielkonflikt zwischen schnellem Lastaufbau und geringer Stickoxidbildung.

Die der Abgasturbine 26B zugeführte Abgasenthalpie kann somit nur allmählich angehoben werden (vgl. geringes Temperaturniveau des Temperaturverlaufs A beim Ausschieben). Die Abgasturbine 26B kann den Verdichter 26A somit nur allmählich schneller betreiben. Der Ladedruck steigt nur allmählich an, sodass nur allmählich mehr Kraftstoff zugeführt werden kann, um ein gleichbleibendes Verbrennungsluftverhältnis zu halten. Es ergibt sich ein sogenanntes Turboloch, bei dem die gewünschte Drehmomenterhöhung der Brennkraftmaschine 10 nur verzögert bereitgestellt werden kann.

Dieses Verhalten ist im Drehmomentverlauf A in Figur 3 beispielhaft dargestellt. Zunächst erfolgt ein steiler Drehmomentanstieg aus einem Schwachlastpunkt der Brennkraftmaschine 10 heraus. Danach ergibt sich jedoch ein vergleichsweise flach ansteigendes Drehmoment beim Drehmomentverlauf A, der sich aus der nur allmählich steigenden Abgasenthalpie usw. ergibt.

Daher wird hierin vorgeschlagen, den Betrieb der Brennkraftmaschine 10 zu modifizieren, wenn eine Drehmomenterhöhung gewünscht ist, und damit das Turboloch zu verhindern oder zumindest deutlich zu verkürzen. Der Betrieb soll dabei so modifiziert werden, dass keine erhöhten Stickoxidemissionen erfolgen.

Insbesondere wird vorgeschlagen, zeitlich beabstandet zu dem Zuführen und Verbrennen der ersten Kraftstoffmenge eine zweite Kraftstoffmenge aus Wasserstoff mittels des Kraftstoffinjektors 20 im Expansionstakt vor der Öffnung des Auslassventils 30 zuzuführen.

Zunächst wird - wie bereits beschrieben - eine erste Kraftstoffmenge, vorzugsweise aus Wasserstoff und/oder Erdgas, zu der Hauptbrennkammer 16 zugeführt. Vorzugsweise kann Wasserstoff gasförmig und direkt in die Hauptbrennkammer 16 während des Verdichtungstaktes mittels des Kraftstoffinjektors 20 eingeblasen werden. Aufgrund der gewünschten Drehmomenterhöhung der Brennkraftmaschine 10 kann die erste Kraftstoffmenge erhöht werden. Die erste Kraftstoffmenge wird jedoch nur bis zum Erreichen eines vorgegeben mageren Verbrennungsluftverhältnis λ, z. B. zwischen 1.8 und 4, erhöht werden. Somit entsteht weiterhin ein mageres Luft-Kraftstoff-Gemisch, dessen Verbrennung keine übermäßigen Stickoxidemissionen bewirkt.

Das magere Luft-Kraftstoff-Gemisch aufweisend die erste Kraftstoffmenge wird im Bereich des oberen Totpunkts zwischen Verdichtungstakt und Expansionstakt mittels der Zündvorrichtung 22 fremdgezündet. Es ergibt sich eine magere Verbrennung des Luft-Kraftstoffgemischs.

Das magere Verbrennen der ersten Kraftstoffmenge erfolgt zweckmäßig nur während einer zeitlich ersten Hälfte des Expansionstaktes, vorzugsweise nur während eines zeitlich ersten Drittels, eines zeitlich ersten Viertels, eines zeitlich ersten Fünftels oder eines zeitlich ersten Sechstels des Expansionstaktes. Bei der Verbrennung von Wasserstoff kann das magere Verbrennen sehr schnell beendet sein, z. B. bis 30°KW nach OT im Expansionstakt. Dies kann an dem Temperaturverlauf B in Figur 2 nachvollzogen werden, bei dem die Zylinderinnentemperatur nach dem Verbrennen wieder sinkt (siehe Figur 2: Temperaturverlauf B ab ca. 30°KW).

Die Innentemperatur der Hauptbrennkammer 16 kühlt sich nunmehr um mehrere hundert Kelvin während des Expansionstaktes ab, z. B. bis auf rund 1200 K. Das Abkühlen kann bspw. über einen Kurbelwinkelbereich ≥ 50°KW, ≥ 60°KW oder ≥ 70°KW während des Expansionstaktes direkt im Anschluss an die magere Verbrennung der ersten Kraftstoffmenge erfolgen.

Nach dem Abkühlen wird eine zweite Kraftstoffmenge aus Wasserstoff zu der Hauptbrennkammer 16 noch im Expansionstakt zugeführt. Die zweite Kraftstoffmenge zündet in der noch heißen Hauptbrennkammer 16 vorzugsweise selbst. Das Zuführen der zweiten Kraftstoffmenge und das Verbrennen der zweiten Kraftstoffmenge erfolgt zweckmäßig nur während einer zeitlich zweiten Hälfte des Expansionstaktes. Vorzugsweise erfolgt das Zuführen und das Verbrennen der zweiten Kraftstoffmenge vor dem Öffnen des Auslassventils 30, z. B. in einem Bereich zwischen 40°KW und 0°KW vor dem Öffnen des Auslassventils 30 oder in einem Bereich zwischen 100°KW und 140°KW nach Beginn des Expansionstaktes.

Die (magere) Verbrennung der zweiten Kraftstoffmenge führt zu einer erneuten Erhöhung der mittleren Zylinderinnentemperatur (siehe Figur 2: Temperaturverlauf B ab ca. 120°KW). Die Erhöhung der mittleren Zylinderinnentemperatur bleibt hierbei hinter der mittleren Zylinderinnentemperatur, die durch die magere Verbrennung der ersten Kraftstoffmenge bewirkt wird, zurück. Damit werden zu hohe Temperaturen verhindert, die die Stickoxidemissionen erhöhen würden. Dennoch kann durch die Verbrennung der zweiten Kraftstoffmenge eine Abgasenthalpie erhöht werden (siehe Figur 2: Vergleich Verläufe A und B im Ausschiebetakt). Die erhöhte Abgasenthalpie ermöglicht einen rascheren Drehmomentaufbau der Brennkraftmaschine 10, da die Abgasturbine 26B stärker angetrieben wird und somit der durch den Verdichter erzeugte Ladedruck schneller ansteigt. Dieses Verhalten kann im Drehmomentverlauf B der Figur 3 im Vergleich zum Drehmomentverlauf A der Figur 3 nachvollzogen werden.

Vorzugsweise ist die erste Kraftstoffmenge größer als die zweite Kraftstoffmenge. Beispielsweise kann die zweite Kraftstoffmenge in einem Bereich zwischen 5 % und 25 % derjenigen ersten Kraftstoffmenge sein, die unter Volllast der Brennkraftmaschine 10 zugeführt wird.

Es ist auch möglich, dass die Zuführung der zweiten Kraftstoffmenge an eine Höhe der gewünschten Drehmomenterhöhung angepasst wird, z. B. in Bezug auf die Menge, den Zuführzeitpunkt und die Zuführzeitdauer der zweiten Kraftstoffmenge.

Bei einer größeren gewünschten Drehmomenterhöhung kann die zweite Kraftstoffmenge früher zugeführt werden, über einen längeren Zeitraum zugeführt werden und/oder in größerer Menge zugeführt werden. Bei einer kleineren gewünschten Drehmomenterhöhung kann die zweite Kraftstoffmenge später zugeführt werden, über einen kürzeren Zeitraum zugeführt werden und/oder in kleinerer Menge zugeführt werden. Die Anpassung der Zuführung der zweiten Kraftstoffmenge mittels des Kraftstoffinjektors 20 kann von der Steuereinheit 36 z. B. basierend auf einer Gaspedalstellung vorgenommen werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Brennkraftmaschine
- 12: Lufteinlasskanal
- 14: Abgasauslasskanal
- 16: Hauptbrennkammer
- 18: Kolben
- 20: Kraftstoffinjektor
- 22: Zündvorrichtung
- 24: Zylinderkopf
- 26: Turbolader
- 26A: Verdichter
- 26B: Abgasturbine
- 28: Einlassventil
- 30: Auslassventil
- 32: Pleuel
- 34: Kurbelwelle
- 36: Steuereinheit

## Patentansprüche

1. Verfahren zum Betreiben einer, vorzugsweise wasserstoffbetriebenen, Brennkraftmaschine (10), aufweisend:
mageres Verbrennen einer ersten Kraftstoffmenge, vorzugsweise aus Wasserstoff und/oder Erdgas, während eines Expansionstaktes der Brennkraftmaschine (10) in einer Hauptbrennkammer (16) der Brennkraftmaschine (10);
Abkühlen der Hauptbrennkammer (16) während des Expansionstaktes nach dem mageren Verbrennen;
Zuführen einer zweiten Kraftstoffmenge aus Wasserstoff in die Hauptbrennkammer (16) während des Expansionstaktes nach dem Abkühlen; und
Verbrennen der zweiten Kraftstoffmenge in der Hauptbrennkammer (16) während des Expansionstaktes.

2. Verfahren nach Anspruch 1, wobei das Zuführen der zweiten Kraftstoffmenge und das Verbrennen der zweiten Kraftstoffmenge durchgeführt wird, wenn:
eine Drehmomenterhöhung der Brennkraftmaschine (10) gewünscht ist, und/oder
eine Ladedruckerhöhung, der durch einen Turbolader (26) der Brennkraftmaschine (10) erzeugt wird, gewünscht ist; und/oder
eine Abgasenthalpieerhöhung gewünscht ist.

3. Verfahren nach Anspruch 1 oder Anspruch 2, wobei:
das Zuführen der zweiten Kraftstoffmenge derart angepasst ist, dass eine erste mittlere Temperatur, die in der Hauptbrennkammer (16) bei dem mageren Verbrennen der ersten Kraftstoffmenge entsteht, größer oder gleich einer zweiten mittleren Temperatur, die in der Hauptbrennkammer (16) bei dem Verbrennen der zweiten Kraftstoffmenge entsteht, ist.

4. Verfahren nach einem der vorherigen Ansprüche, wobei:
das magere Verbrennen der ersten Kraftstoffmenge nur während einer zeitlich ersten Hälfte des Expansionstaktes erfolgt; und
das Zuführen der zweiten Kraftstoffmenge und das Verbrennen der zweiten Kraftstoffmenge nur während einer zeitlich zweiten Hälfte des Expansionstaktes erfolgt.

5. Verfahren nach einem der vorherigen Ansprüche, wobei:
das Zuführen der zweiten Kraftstoffmenge vor einem Öffnen eines Auslassventils (30) der Hauptbrennkammer (16) erfolgt, vorzugsweise in einem Bereich zwischen 40°KW und 0°KW vor dem Öffnen des Auslassventils (30); und/oder
das Zuführen der zweiten Kraftstoffmenge in einem Bereich zwischen 100°KW und 140°KW nach einem Beginn des Expansionstaktes erfolgt.

6. Verfahren nach einem der vorherigen Ansprüche, wobei:
das magere Verbrennen der ersten Kraftstoffmenge innerhalb einer zeitlich ersten Hälfte des Expansionstaktes, innerhalb eines zeitlich ersten Drittels des Expansionstaktes, innerhalb eines zeitlich ersten Viertels des Expansionstaktes, innerhalb eines zeitlich ersten Fünftels des Expansionstaktes oder innerhalb eines zeitlich ersten Sechstels des Expansionstaktes endet.

7. Verfahren nach einem der vorherigen Ansprüche, wobei:
das Abkühlen über einen Kurbelwinkelbereich ≥ 50°KW, ≥ 60°KW oder ≥ 70°KW erfolgt; und/oder
die Hautbrennkammer (16) bei dem Abkühlen um mehrere hundert Kelvin abkühlt.

8. Verfahren nach einem der vorherigen Ansprüche, wobei:
die erste Kraftstoffmenge größer als die zweite Kraftstoffmenge ist; und/oder
die zweite Kraftstoffmenge in einem Bereich zwischen 5 % und 25 % derjenigen ersten Kraftstoffmenge, die unter Volllast der Brennkraftmaschine (10) zugeführt wird, ist.

9. Verfahren nach einem der vorherigen Ansprüche, wobei:
das Zuführen der zweiten Kraftstoffmenge an eine gewünschten Drehmomenterhöhung der Brennkraftmaschine (10) angepasst oder anpassbar ist.

10. Verfahren nach Anspruch 9, wobei eine erste gewünschte Drehmomenterhöhung der Brennkraftmaschine (10) kleiner als eine zweite gewünschte Drehmomenterhöhung der Brennkraftmaschine (10) ist, und wobei:
- ein Zuführstartzeitpunkt des Zuführens der zweiten Kraftstoffmenge bei der ersten gewünschten Drehmomenterhöhung später als bei der zweiten gewünschten Drehmomenterhöhung ist; und/oder
- eine Zuführzeitdauer des Zuführens der zweiten Kraftstoffmenge bei der ersten gewünschten Drehmomenterhöhung kürzer als bei der zweiten gewünschten Drehmomenterhöhung ist; und/oder
- die zweite Kraftstoffmenge bei der ersten gewünschten Drehmomenterhöhung kleiner als bei der zweiten gewünschten Drehmomenterhöhung ist.

11. Verfahren nach einem der vorherigen Ansprüche, wobei:
das magere Verbrennen der ersten Kraftstoffmenge mit einem Verbrennungsluftverhältnis (λ) zwischen 1.8 und 7 erfolgt; und/oder
das Verbrennen der zweiten Kraftstoffmenge ein mageres Verbrennen ist.

12. Verfahren nach einem der vorherigen Ansprüche, ferner aufweisend:
Zuführen, vorzugsweise direktes Einblasen, der ersten Kraftstoffmenge in die Hauptbrennkammer (16) in einem Verdichtungstakt der Brennkraftmaschine (10) und/oder zu Beginn des Expansionstaktes der Brennkraftmaschine (10),
wobei:
die erste Kraftstoffmenge bei einer gewünschten Drehmomenterhöhung der Brennkraftmaschine (10) nur bis zu einem vorgegebenen mageren Verbrennungsluftverhältnis (λ) erhöht wird, vorzugsweise oberhalb von 1.3, besonders bevorzugt oberhalb von 1.8.

13. Verfahren nach einem der vorherigen Ansprüche, ferner aufweisend:
Selbstzünden der zweiten Kraftstoffmenge in der Hauptbrennkammer (16) während des Expansionstaktes; und/oder
Fremdzünden der ersten Kraftstoffmenge in der Hauptbrennkammer (16); und/oder
Zuführen von Abgas aus der Hauptbrennkammer (16) zu einem Turbolader (26) der Brennkraftmaschine (10).

14. Verfahren nach einem der vorherigen Ansprüche, wobei:
das Zuführen der zweiten Kraftstoffmenge mittels direkten Einblasens in die Hauptbrennkammer (16) und/oder mittels eines separaten Wasserstoff-Injektors (20) erfolgt.

15. Brennkraftmaschine (10) oder Fahrzeug mit einer Brennkraftmaschine (10), wobei die Brennkraftmaschine (10) aufweist:
eine Hauptbrennkammer (16);
einen Wasserstoff-Injektor (20) zum Einblasen von Wasserstoff in die Hauptbrennkammer (16);
einen Turbolader (26); und
eine Steuereinheit (36), die zum Ausführen eines Verfahrens nach einem der vorherigen Ansprüche konfiguriert ist.

## Claims

1. Method for operating an, preferably hydrogen-powered, internal combustion engine (10), comprising:
lean burning of a first fuel amount, preferably of hydrogen and/or natural gas, during an expansion stroke of the internal combustion engine (10) in a main combustion chamber (16) of the internal combustion engine (10);
cooling the main combustion chamber (16) during the expansion stroke after the lean burning;
supplying a second fuel amount of hydrogen into the main combustion chamber (16) during the expansion stroke after the cooling; and
burning the second fuel amount in the main combustion chamber (16) during the expansion stroke.

2. Method according to claim 1, wherein the supplying of the second fuel amount and the burning of the second fuel amount are performed when:
a torque increase of the internal combustion engine (10) is desired, and/or
a boost pressure increase generated by a turbocharger (26) of the internal combustion engine (10) is desired; and/or
an exhaust gas enthalpy increase is desired.

3. Method according to claim 1 or claim 2, wherein:
the supplying of the second fuel amount is adapted such that a first mean temperature developed in the main combustion chamber (16) during the lean burning of the first fuel amount is greater than or equal to a second mean temperature developed in the main combustion chamber (16) during the burning of the second fuel amount.

4. Method according to any one of the preceding claims, wherein:
the lean burning of the first fuel amount is performed only during a temporally first half of the expansion stroke; and
the supplying of the second fuel amount and the burning of the second fuel amount is performed only during a temporally second half of the expansion stroke.

5. Method according to any of the preceding claims, wherein:
the supplying of the second fuel amount is performed before opening an exhaust valve (30) of the main combustion chamber (16), preferably in a range between 40°CA and 0°CA before opening the exhaust valve (30); and/or
the supplying of the second fuel amount is performed in a range between 100°CA and 140°CA after a start of the expansion stroke.

6. Method according to any one of the preceding claims, wherein:
the lean burning of the first fuel amount terminates within a temporally first half of the expansion stroke, within a temporally first third of the expansion stroke, within a temporally first fourth of the expansion stroke, within a temporally first fifth of the expansion stroke, or within a temporally first sixth of the expansion stroke.

7. Method according to any one of the preceding claims, wherein:
the cooling is performed over a crank angle range ≥ 50°CA, ≥ 60° CA or ≥ 70° CA; and/or
the main combustion chamber (16) cools by several hundred Kelvin during the cooling.

8. Method according to any one of the preceding claims, wherein:
the first fuel amount is greater than the second fuel amount; and/or
the second fuel amount is in a range between 5% and 25% of that first fuel amount, which is supplied to the internal combustion engine (10) under full load.

9. Method according to any one of the preceding claims, wherein:
the supplying of the second fuel amount is adapted or adaptable to a desired torque increase of the internal combustion engine (10).

10. Method according to claim 9, wherein a first desired torque increase of the internal combustion engine (10) is smaller than a second desired torque increase of the internal combustion engine (10), and wherein:
- a supply start time of supplying the second fuel amount is later at the first desired torque increase than at the second desired torque increase; and/or
- a supply time period of supplying the second fuel amount is shorter at the first desired torque increase than at the second desired torque increase; and/or
- the second fuel amount is smaller at the first desired torque increase than at the second desired torque increase.

11. Method according to any one of the preceding claims, wherein:
the lean burning of the first fuel amount is performed with an air-fuel ratio (λ) between 1.8 and 7; and/or
the burning of the second fuel amount is a lean burning.

12. Method according to any one of the preceding claims, further comprising:
supplying, preferably directly injecting, the first fuel amount into the main combustion chamber (16) in a compression stroke of the internal combustion engine (10) and/or at the beginning of the expansion stroke of the internal combustion engine (10),
wherein:
the first fuel amount is increased at a desired torque increase of the internal combustion engine (10) only up to a predetermined lean air-fuel ratio (λ), preferably above 1.3, particularly preferred above 1.8.

13. Method according to any one of the preceding claims, further comprising:
self-igniting the second fuel amount in the main combustion chamber (16) during the expansion stroke; and/or
spark igniting the first fuel amount in the main combustion chamber (16); and/or
supplying exhaust gas from the main combustion chamber (16) to a turbocharger (26) of the internal combustion engine (10).

14. Method according to any of the preceding claims, wherein:
the supplying of the second fuel amount is performed by direct injection into the main combustion chamber (16) and/or by a separate hydrogen injector (20).

15. Internal combustion engine (10) or a vehicle having an internal combustion engine (10), the internal combustion engine (10) comprising:
a main combustion chamber (16);
a hydrogen injector (20) for injecting hydrogen into the main combustion chamber (16);
a turbocharger (26); and
a control unit (36) configured to perform a method according to any one of the preceding claims.

## Revendications

1. Procédé d'exploitation d'un moteur à combustion interne (10), de préférence alimenté à l'hydrogène, présentant :
la combustion pauvre d'une première quantité de carburant, de préférence d'hydrogène et/ou de gaz naturel, pendant une phase d'expansion du moteur à combustion interne (10) dans une chambre de combustion principale (16) du moteur à combustion interne (10) ;
le refroidissement de la chambre de combustion principale (16) pendant la phase d'expansion après la combustion pauvre ;
l'amenée d'une deuxième quantité de carburant d'hydrogène dans la chambre de combustion principale (16) pendant la phase d'expansion après le refroidissement ; et
la combustion de la deuxième quantité de carburant dans la chambre de combustion principale (16) pendant la phase d'expansion.

2. Procédé selon la revendication 1, dans lequel l'amenée de la deuxième quantité de carburant et la combustion de la deuxième quantité de carburant sont effectuées lorsque :
une augmentation du couple de rotation du moteur à combustion interne (10) est souhaitée, et/ou
une augmentation de la pression de suralimentation générée par un turbocompresseur (26) du moteur à combustion interne (10) est souhaitée ; et/ou
une augmentation de l'enthalpie des gaz d'échappement est souhaitée.

3. Procédé selon la revendication 1 ou la revendication 2, dans lequel :
l'amenée de la deuxième quantité de carburant est adaptée de telle sorte qu'une première température moyenne produite dans la chambre de combustion principale (16) lors de la combustion pauvre de la première quantité de carburant est supérieure ou égale à une deuxième température moyenne produite dans la chambre de combustion principale (16) lors de la combustion de la deuxième quantité de carburant.

4. Procédé selon l'une quelconque des revendications précédentes, dans lequel :
la combustion pauvre de la première quantité de carburant n'est effectuée que pendant une première moitié temporelle de la phase d'expansion ; et
l'amenée de la deuxième quantité de carburant et la combustion de la deuxième quantité de carburant ne sont effectuées que pendant une deuxième moitié temporelle de la phase d'expansion.

5. Procédé selon l'une quelconque des revendications précédentes, dans lequel :
l'amenée de la deuxième quantité de carburant est effectuée avant une ouverture d'une soupape d'échappement (30) de la chambre de combustion principale (16), de préférence dans une plage comprise entre 40°KW et 0°KW avant l'ouverture de la soupape d'échappement (30) ; et/ou
l'amenée de la deuxième quantité de carburant est effectuée dans une plage comprise entre 100°KW et 140°KW après un début de la phase d'expansion.

6. Procédé selon l'une quelconque des revendications précédentes, dans lequel :
la combustion pauvre de la première quantité de carburant se termine dans une première moitié temporelle de la phase d'expansion, dans un premier tiers temporel de la phase d'expansion, dans un premier quart temporel de la phase d'expansion, dans un premier cinquième temporel de la phase d'expansion ou dans un premier sixième temporel de la phase d'expansion.

7. Procédé selon l'une quelconque des revendications précédentes, dans lequel :
le refroidissement s'effectue sur une plage d'angles de vilebrequin ≥ 50°KW, ≥ 60°KW ou ≥ 70°KW ; et/ou
la chambre de combustion principale (16) se refroidit de plusieurs centaines de kelvins lors du refroidissement.

8. Procédé selon l'une quelconque des revendications précédentes, dans lequel :
la première quantité de carburant est supérieure à la deuxième quantité de carburant ; et/ou
la deuxième quantité de carburant est comprise dans une plage comprise entre 5 % et 25 % de la première quantité de carburant fournie au moteur à combustion interne (10) à pleine charge.

9. Procédé selon l'une quelconque des revendications précédentes, dans lequel :
l'amenée de la deuxième quantité de carburant est adaptée ou adaptable à une augmentation du couple de rotation souhaitée du moteur à combustion interne (10).

10. Procédé selon la revendication 9, dans lequel une première augmentation du couple de rotation souhaitée du moteur à combustion interne (10) est inférieure à une deuxième augmentation du couple de rotation souhaitée du moteur à combustion interne (10), et dans lequel :
- un moment de début d'amenée de la deuxième quantité de carburant est plus tardif pour la première augmentation du couple de rotation souhaitée que pour la deuxième augmentation du couple de rotation souhaitée ; et/ou
- une durée de temps d'amenée de l'amenée de la deuxième quantité de carburant est plus courte pour la première augmentation du couple de rotation souhaitée que pour la deuxième augmentation du couple de rotation souhaitée ; et/ou
- la deuxième quantité de carburant est inférieure pour la première augmentation du couple de rotation souhaitée que pour la deuxième augmentation du couple de rotation souhaitée.

11. Procédé selon l'une quelconque des revendications précédentes, dans lequel :
la combustion pauvre de la première quantité de carburant est effectuée avec un rapport d'air de combustion (X) compris entre 1,8 et 7 ; et/ou
la combustion de la deuxième quantité de carburant est une combustion pauvre.

12. Procédé selon l'une quelconque des revendications précédentes, présentant en outre :
l'amenée, de préférence l'injection directe, de la première quantité de carburant dans la chambre de combustion principale (16) dans une phase de compression du moteur à combustion interne (10) et/ou au début de la phase d'expansion du moteur à combustion interne (10), dans lequel :
la première quantité de carburant n'est augmentée que jusqu'à un rapport d'air de combustion pauvre prédéfini (X), de préférence au-dessus de 1,3, de manière particulièrement préférée au-dessus de 1,8, pour une augmentation du couple de rotation souhaitée du moteur à combustion interne (10).

13. Procédé selon l'une quelconque des revendications précédentes, présentant en outre :
l'auto-allumage de la deuxième quantité de carburant dans la chambre de combustion principale (16) pendant la phase d'expansion ; et/ou
l'allumage externe de la première quantité de carburant dans la chambre de combustion principale (16) ; et/ou
l'amenée de gaz d'échappement de la chambre de combustion principale (16) à un turbocompresseur (26) du moteur à combustion interne (10).

14. Procédé selon l'une quelconque des revendications précédentes, dans lequel :
l'amenée de la deuxième quantité de carburant est effectuée au moyen d'une injection directe dans la chambre de combustion principale (16) et/ou au moyen d'un injecteur d'hydrogène séparé (20).

15. Moteur à combustion interne (10) ou véhicule avec un moteur à combustion interne (10), le moteur à combustion interne (10) présentant :
une chambre de combustion principale (16) ;
un injecteur d'hydrogène (20) pour injecter de l'hydrogène dans la chambre de combustion principale (16) ;
un turbocompresseur (26) ; et
une unité de commande (36) qui est configurée pour exécuter un procédé selon l'une quelconque des revendications précédentes.
